# EUROPEAN PATENT APPLICATION

(11) **EP 4 819 683 A1**
(43) Date of publication of application: **07.10.2026**
(21) Application number: 24902637.8
(22) Date of filing: 03.12.2024
(51) Int. Cl.: H04W 28/08

(54) **COMMUNICATION METHOD, AND APPARATUS**

(30) Priority: 15.12.2023 CN 202311734404
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN)
(74) Representative: Goddar, Heinz J.
(86) International application number: PCT/CN2024/136381
(87) International publication number: WO 2025/124216

(57) **Abstract**

Embodiments of this application provide a communication method and apparatus, and relate to the communication field, so that corresponding task allocations and corresponding data transmission configurations may be provided for different computing service requests of a terminal device. The method includes: A first network element associates a first identifier corresponding to one first request message in at least one first request message sent by a first terminal device with a second identifier corresponding to a first task related to a first service requested by the first request message, and notifies the first terminal device, so that the first terminal device may determine, based on the second identifier associated with the first identifier corresponding to the first request message, a specific first request message that requests a first service for which a transmission configuration of the first task related to the first service is configured.

## Description

This application claims priority to Chinese Patent Application No. 202311734404.9, filed with the China National Intellectual Property Administration on December 15, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

With acceleration of digital transformation in various industries such as healthcare, factories, ports, coal mines, and governments and enterprises, computing and communication are becoming core foundational capabilities for enabling digital and intelligent transformation of the industries. Therefore, operators propose a concept of a computational power network and organize standardization discussions in a 3rd generation partnership project (3rd generation partnership project, 3GPP). The computational power network is to sense ubiquitous computing and services through a network, and schedule computing tasks to appropriate compute nodes for processing, to improve utilization of network resources and compute resources, and provide services with a low delay and high reliability for users, so as to ensure user experience.

When a computing service is provided for a terminal device through a network, the network needs to schedule a compute node to execute a computing task offloaded by the terminal device, and establish a data transmission tunnel between the compute node and the terminal device. However, it remains unclear currently how the network provides, based on different computing service requests of the terminal device, corresponding task allocations and corresponding data transmission configurations.

### SUMMARY

Embodiments of this application provide a communication method and apparatus, so that corresponding task allocations and corresponding data transmission configurations may be provided for different computing service requests of a terminal device.

To achieve the foregoing objective, this application uses the following technical solutions.

According to a first aspect, a communication method is provided. The method may be performed by a first network element, or may be performed by a component of the first network element, for example, a processor, a chip, or a chip system of the first network element, or may be implemented by a logical module or software that can implement all or a part of functions of the first network element. The method includes: receiving at least one first request message from a first terminal device, where one first request message in the at least one first request message is used to request a first service, the first request message includes a first identifier and a quality of service QoS requirement of the first service, and the first identifier corresponds to the first request message; sending a second request message to a first compute node based on the first request message, where the second request message is used to request the first compute node to execute a first task related to the first service, the second request message includes a second identifier, the second identifier corresponds to the first task, and the second identifier is associated with the first identifier; receiving a second response message from the first compute node, where the second response message indicates that the first compute node accepts execution of the first task; and sending a first response message to the first terminal device based on the second response message, where the first response message indicates to provide the first service, and the first response message includes the first identifier and the second identifier.

According to the communication method, in a scenario in which the first terminal device sends the at least one first request message, the first network element associates the first identifier corresponding to the first request message in the at least one first request message sent by the first terminal device with the second identifier corresponding to the first task related to the first service requested by the first request message, and notifies the first terminal device, so that the first terminal device may determine, based on the second identifier associated with the first identifier corresponding to the first request message, a specific first request message that requests a first service for which a transmission configuration of the first task related to the first service is configured. In this way, the first network element may provide a corresponding task allocation and a corresponding data transmission configuration for each service request initiated by the first terminal device, to ensure service reliability.

In a possible design solution, the method provided in this embodiment of this application may further include: sending a third request message to a user plane network element; and sending a fourth request message to an access network device. The third request message is used to request the user plane network element to establish a tunnel with the access network device for transmitting data of the first task, and the third request message includes a first QoS configuration used to establish the tunnel. The fourth request message is used to request the access network device to establish a radio bearer with the first terminal device for transmitting the data of the first task, the fourth request message includes a second QoS configuration used to establish the radio bearer and the second identifier, and the first QoS configuration and the second QoS configuration are determined based on the QoS requirement of the first service. For example, when the first compute node is an application server or a compute platform located in an edge network, data transmission between the first terminal device and the first compute node needs to be implemented via a data plane. In this way, the first network element may trigger the access network device and the user plane network element to establish a tunnel for transmitting task data.

In a possible design solution, the third request message may further include first information, and the first information indicates a filtering and mapping rule for transmitting the data of the first task. In this way, the first network element may further configure the first information for the user plane network element while configuring the user plane network element to establish the tunnel, to indicate the filtering and mapping rule during transmission of user plane data. This may reduce signaling overheads, and may further ensure reliability of data transmission of the user plane network element.

In a possible design solution, the first information may include at least one of the following: application port information, a first parameter group, or a QoS flow template, where the application port information includes an application port number of the first terminal device and an application port number of the first compute node, the first parameter group includes an internet protocol IP address of the first terminal device, the application port number of the first terminal device, a data transmission protocol type corresponding to the first service, an IP address of the first compute node, and the application port number of the first compute node, the QoS flow template includes filtering and mapping rules respectively corresponding to a plurality of different parameter groups, and the plurality of different parameter groups include the first parameter group. In this embodiment of this application, the data transmission protocol type corresponding to the first service may alternatively be predefined or preconfigured, and the QoS flow template may alternatively be obtained by the user plane network element from a session management network element.

In a possible design solution, the first request message may further include second information, and the second information may include at least one of the following: the IP address of the first terminal device, the application port number of the first terminal device, or the data transmission protocol type corresponding to the first service. The method provided in this embodiment of this application may further include: sending the second information to the first compute node. In this way, the first network element may further send the second information to the first compute node, to ensure that the first compute node can accurately send the task data to the first terminal device.

In a possible design solution, the first response message may further include information about the first compute node and/or the QoS flow template, the information about the first compute node includes the IP address of the first compute node and/or the application port number of the first compute node, and the information about the first compute node and/or the QoS flow template are/is used to perform filtering and mapping on the data of the first task. In this way, the first network element may further include, in the first response message, information indicating the first terminal device to perform filtering and mapping on the data of the first task, to ensure reliability of data transmission.

In a possible design solution, the QoS flow template is specifically used to filter and map an IP data flow of the first task into a first QoS flow, or the QoS flow template is used to filter an IP data flow of the first task as a service data flow SDF and map the SDF to a first QoS flow.

Based on a computing service and a data transmission procedure provided in this method, a network may schedule a computing task requested by a terminal device to an appropriate compute node, to provide a corresponding compute resource for execution and provide a corresponding communication resource for transmission, thereby ensuring reliability of both execution of the computing task and data transmission.

According to a second aspect, a communication method is provided. The method may be performed by a first terminal device, or may be performed by a component of the first terminal device, for example, a processor, a chip, or a chip system of the first terminal device, or may be implemented by a logical module or software that can implement all or a part of functions of the first terminal device. The method includes: sending at least one first request message to a first network element, where one first request message in the at least one first request message is used to request a first service, the first request message includes a first identifier and a quality of service QoS requirement of the first service, and the first identifier corresponds to the first request message; and receiving a first response message from the first network element, where the first response message indicates to provide the first service, the first response message includes the first identifier and a second identifier, the second identifier is associated with the first identifier, and the second identifier corresponds to a first task related to the first service.

In a possible design solution, the method provided in this embodiment of this application may further include: receiving first configuration information from a second device, where the first configuration information includes the second identifier, the first configuration information is used to configure the first terminal device to establish a radio bearer with the second device for transmitting data of the first task, and the second device includes a second terminal device or an access network device to which the first terminal device belongs; determining, based on the second identifier, that the first configuration information is configuration information associated with the first identifier; and transmitting the data of the first task by using the radio bearer configured by the first configuration information.

In a possible design solution, transmitting the data of the first task by using the radio bearer configured by the first configuration information may include: mapping an IP data flow of the first task to a first QoS flow based on a first parameter group and/or a QoS flow template, where the first parameter group includes an IP address of the first terminal device, an application port number of the first terminal device, a data transmission protocol type corresponding to the first service, an IP address of a first compute node, and an application port number of the first compute node, and the first compute node is a compute node that executes the first task; and transmitting the first QoS flow by using the radio bearer configured by the first configuration information.

In a possible design solution, transmitting the data of the first task by using the first configuration information may include: mapping an IP data flow of the first task to a first QoS flow based on the second identifier, and transmitting the first QoS flow by using the radio bearer configured by the first configuration information; or transmitting an IP data flow of the first task by using the radio bearer configured by the first configuration information, where the IP data flow of the first task includes the second identifier.

In a possible design solution, the first request message may further include second information, and the second information may include at least one of the following: the IP address of the first terminal device, the application port number of the first terminal device, or the data transmission protocol type corresponding to the first service.

In a possible design solution, the first response message may further include information about the first compute node and/or the QoS flow template, the information about the first compute node includes the IP address of the first compute node and/or the application port number of the first compute node, and the information about the first compute node and/or the QoS flow template are/is used to perform filtering and mapping on the data of the first task.

In a possible design solution, the QoS flow template is specifically used to filter and map the IP data flow of the first task into the first QoS flow, or the QoS flow template is used to filter the IP data flow of the first task as a service data flow SDF and map the SDF to the first QoS flow.

Based on a computing service and a data transmission procedure provided in this method, a computing task requested by a terminal device may be offloaded to a compute node for execution, and reliability of both execution of the computing task and data transmission is ensured.

According to a third aspect, a communication method is provided. The method may be performed by a first compute node, or may be performed by a component of the first compute node, for example, a processor, a chip, or a chip system of the first compute node, or may be implemented by a logical module or software that can implement all or a part of functions of the first compute node. The method includes: receiving a second request message from a first network element, where the second request message is used to request the first compute node to execute a first task related to a first service, the second request includes a second identifier, and the second identifier corresponds to the first task; and sending a second response message to the first network element based on the second request message, where the second response message indicates that the first compute node accepts execution of the first task.

In a possible design solution, the method provided in this embodiment of this application may further include: sending second configuration information to a first terminal device, where the second configuration information includes the second identifier, and the second configuration information is used to configure the first terminal device to establish a radio bearer with the first compute node for transmitting data of the first task; and sending the data of the first task to the first terminal device by using the radio bearer configured by the second configuration information.

In a possible design solution, the method provided in this embodiment of this application may further include: sending an IP data flow of the first task or a first QoS flow to a user plane network element, where the IP data flow of the first task or the first QoS flow includes the second identifier, and the first QoS flow is obtained by mapping the IP data flow of the first task based on the second identifier.

In a possible design solution, the second request message may further include a QoS requirement of the first task, and the QoS requirement of the first task is determined based on the QoS requirement of the first service.

In a possible design solution, the second response message may further include information about the first compute node, the information about the first compute node includes the IP address of the first compute node and/or the application port number of the first compute node, and the information about the first compute node is used to perform filtering and mapping on the data of the first task.

In a possible design solution, the second response message may further include the QoS flow template, and the QoS flow template is used to perform filtering and mapping on the data of the first task.

In a possible design solution, the QoS flow template is specifically used to filter and map the IP data flow of the first task into the first QoS flow, or the QoS flow template is used to filter the IP data flow of the first task as a service data flow SDF and map the SDF to the first QoS flow.

For technical effects of the method according to the second aspect or the third aspect, refer to the related descriptions of the technical effects of the method according to the first aspect. Details are not described herein again.

According to a fourth aspect, a communication method is provided. The method may be performed by a second device, or may be performed by a component of the second device, for example, a processor, a chip, or a chip system of the second device, or may be implemented by a logical module or software that can implement all or a part of functions of the second device. The method includes: sending second configuration information to a first terminal device, where the second configuration information includes a second identifier, and the second configuration information is used to configure the first terminal device to establish a radio bearer with the second device for transmitting data of a first task; and sending the data of the first task to the first terminal device by using the radio bearer configured by the second configuration information, where the second identifier corresponds to the first task.

In this embodiment of this application, the second device may be an access network device to which the first terminal device belongs, or may be a second terminal device different from the first terminal device. This is not limited herein.

In a possible design solution, the second device is an access network device to which the first terminal device belongs; and sending the second configuration information to the first terminal device may include: receiving a fourth request message from a first network element, where the fourth request message is used to request the access network device to establish a radio bearer with the first terminal device for transmitting the data of the first task, and the fourth request includes a second QoS configuration used to establish the radio bearer and the second identifier; and sending the second configuration information to the first terminal device based on the fourth request message.

In a possible design solution, the method provided in this embodiment of this application may further include: receiving an IP data flow of the first task or a first QoS flow from a user plane network element, where the IP data flow of the first task or the first QoS flow includes the second identifier.

In a possible design solution, sending the data of the first task to the first terminal device by using the radio bearer configured by the second configuration information may include: sending an IP data flow of the first task or a first QoS flow to the first terminal device by using the radio bearer configured by the second configuration information, where the IP data flow of the first task or the first QoS flow includes the second identifier.

Based on a computing service and a data transmission procedure provided in this method, the access network device may provide a corresponding transmission configuration for a computing task requested by a terminal device, thereby ensuring reliability of both execution of the computing task and data transmission.

According to a fifth aspect, a communication method is provided. The method may be performed by a user plane network element, or may be performed by a component of the user plane network element, for example, a processor, a chip, or a chip system of the user plane network element, or may be implemented by a logical module or software that can implement all or a part of functions of the user plane network element. The method includes: receiving a third request message from a first network element, where the third request message is used to request the user plane network element to establish a tunnel with an access network device for transmitting data of a first task, and the third request message includes a first QoS configuration used to establish the tunnel; and transmitting the data of the first task through the tunnel.

In a possible design solution, the third request message may further include first information, and the first information indicates a filtering and mapping rule for transmitting the data of the first task.

In a possible design solution, the first information may include at least one of the following: application port information, a first parameter group, or a QoS flow template, where the application port information includes an application port number of a first terminal device and an application port number of a first compute node, the first parameter group includes an internet protocol IP address of the first terminal device, the application port number of the first terminal device, a data transmission protocol type corresponding to a first service, an IP address of the first compute node, and the application port number of the first compute node, the QoS flow template includes filtering and mapping rules respectively corresponding to a plurality of different parameter groups, and the plurality of different parameter groups include the first parameter group.

In a possible design solution, transmitting the data of the first task through the tunnel may include: mapping an IP data flow of the first task to a first QoS flow based on the first parameter group and/or the QoS flow template, where the first parameter group includes the IP address of the first terminal device, the application port number of the first terminal device, the data transmission protocol type corresponding to the first service, the IP address of the first compute node, and the application port number of the first compute node, the first compute node is a compute node that executes the first task, and the first service is related to the first task; and transmitting the first QoS flow through the tunnel.

In a possible design solution, transmitting the data of the first task through the tunnel may include: receiving an IP data flow of the first task from the first compute node, where the IP data flow of the first task includes a second identifier, the second identifier corresponds to the first task, and the first compute node is a compute node that executes the first task; and transmitting the IP data flow of the first task through the tunnel.

Based on a computing service and a data transmission procedure provided in this method, a data transmission tunnel for a computing task requested by a terminal device may be provided between the user plane network element and the access network device, and filtering and mapping are performed on a data flow, thereby ensuring reliability of both execution of the computing task and data transmission.

According to a sixth aspect, a communication apparatus is provided, to implement the foregoing methods. The communication apparatus may be the first network element in the first aspect, the first terminal device in the second aspect, the first compute node in the third aspect, the second device in the fourth aspect, or the user plane network element in the fifth aspect; or an apparatus including the first network element, the first terminal device, the first compute node, the second device, or the user plane network element; or an apparatus such as a chip included in the first network element, the first terminal device, the first compute node, the second device, or the user plane network element. The communication apparatus includes a corresponding module, unit, or means (means) for implementing the method according to any one of the first aspect to the fifth aspect. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module is configured to perform a transceiver function of the communication apparatus in the sixth aspect. The processing module is configured to perform a function other than the transceiver function of the communication apparatus in the sixth aspect.

In a possible design solution, the transceiver module may include a receiving module and a sending module. The sending module is configured to implement a sending function of the communication apparatus in the sixth aspect, and the receiving module is configured to implement a receiving function of the communication apparatus in the sixth aspect.

In a possible design solution, the communication apparatus in the sixth aspect may further include a storage module, and the storage module stores a program or instructions. When the processing module executes the program or the instructions, the communication apparatus in the sixth aspect may be caused to perform the method according to any one of the first aspect to the fifth aspect.

According to a seventh aspect, a communication apparatus is provided (for example, the communication apparatus may be a chip or a chip system). The communication apparatus includes a processor, configured to implement functions in any one of the foregoing aspects.

In a possible design solution, the communication apparatus may further include a memory, and the memory is configured to store necessary program instructions and data. The processor is coupled to the memory, and the processor is configured to execute a computer program or instructions stored in the memory, so that the communication apparatus performs the method according to any one of the possible implementations of the first aspect to the fifth aspect.

In a possible design solution, the communication apparatus in the seventh aspect may further include a transceiver. The transceiver may be a transceiver circuit or an interface circuit. The transceiver may be used by the communication apparatus in the seventh aspect to communicate with another communication apparatus.

In a possible design solution, the processor may be integrated with the memory.

In some possible designs, when the apparatus is a chip system, the apparatus may include a chip, or may include a chip and another discrete device.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect to the fifth aspect through a logic circuit or by executing code instructions.

It may be understood that, when the communication apparatus provided in the seventh aspect or the eighth aspect is a chip, the sending action/function may be understood as an output, and the receiving action/function may be understood as an input.

According to a ninth aspect, a computer-readable storage medium is provided. The computer-readable storage medium stores a computer program or instructions. When the computer program or the instructions are run on a communication apparatus, the communication apparatus may be caused to perform the method according to any one of the first aspect to the fifth aspect.

According to a tenth aspect, a computer program product including instructions is provided. The computer program product includes computer program code. When the computer program code is run on a communication apparatus, the communication apparatus may be caused to perform the method according to any one of the first aspect to the fifth aspect.

According to an eleventh aspect, a communication system is provided, including the first network element configured to implement the method according to the first aspect, the first terminal device configured to implement the method according to the second aspect, and the first compute node configured to implement the method according to the third aspect.

### BRIEF DESCRIPTION OF DRAWINGS

FIG. 1 is a diagram of an architecture of an XaaS system;
FIG. 2 is a diagram of an architecture of a computational power network that can be used to schedule computing tasks;
FIG. 3 is a diagram of an architecture of a communication system according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

All aspects, embodiments, or features are presented in embodiments of this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a worldwide interoperability for microwave access (worldwide interoperability for microwave access, WiMAX) communication system, a 4th generation (4th generation, 4G) mobile communication system such as a long-term evolution (long-term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a sixth generation (sixth generation, 6G) mobile communication system.

With acceleration of digital transformation in various industries such as healthcare, factories, ports, coal mines, and governments and enterprises, computing and communication are becoming core foundational capabilities for enabling digital and intelligent transformation of the industries. Therefore, operators propose a concept of a computational power network and organize standardization discussions in a 3GPP. A meaning of the computational power network is to sense ubiquitous computing and services through a network, and schedule computing tasks to appropriate compute nodes for processing, to improve utilization of network resources and compute resources, and provide services with a low delay and high reliability for users, so as to ensure user experience.

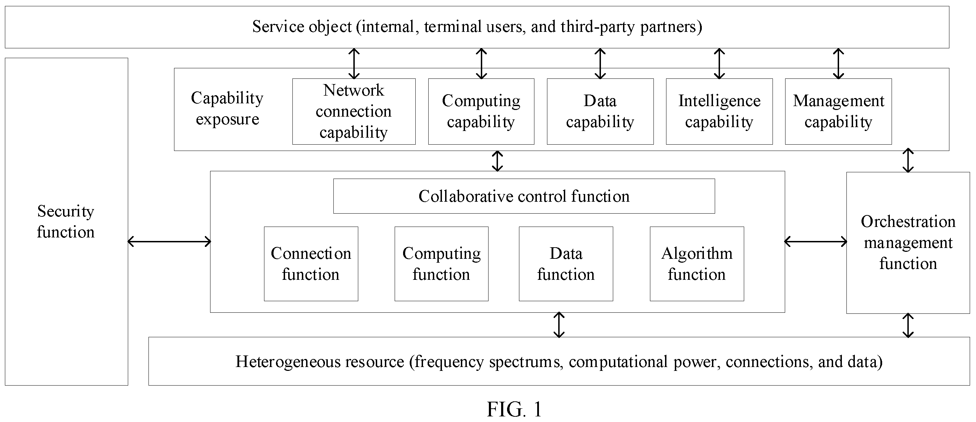

Targeting 6G networks and future service requirements such as low-delay requirements of immersive services like extended reality (extended reality, XR) and holography as well as real-time processing requirements for massive data of intelligent services such as robots, agents, and AI-generated content (AI-generated content, AIGC) large models, an IMT-2030 (6G) promotion group believes that 6G services present immersive and intelligent features, and the 6G network needs to support scheduling of AI resources and processing of an ultra-large amount of data, to reduce a computation amount and energy consumption of a terminal device, so as to meet a requirement for a capability of a lighter, more immersive, and more intelligent terminal device. Therefore, an X as a service (X as a service, XaaS) system architecture shown in FIG. 1 is proposed. In the system architecture, a communication device has capability exposure, collaborative control, orchestration management, and security functions, so that a 6G network architecture changes from "connection-centric" to "task-centric".

A conventional "connection-centric" network architecture aims to provide connection tunnels required for data communication between terminal devices and between a terminal device and an application server, corresponding lifecycle management mechanisms (for example, creation, modification, deletion, and anchor migration of an end-to-end communication tunnel), and communication quality of service (quality of service, QoS) assurance. For example, a connection establishment method in a 5G network, namely, a protocol data unit (protocol data unit, PDU) session establishment procedure, is to provide a transmission tunnel for data transmission between a terminal device and an application server (application server) in a data network (data network, DN), including establishing a data radio bearer (data radio bearer, DRB) between the terminal device and a radio access network (radio access network, RAN) and an NG interface user plane tunnel (NG-U Tunnel) between the RAN and a user plane function (user plane function, UPF) of a core network, and provide corresponding QoS assurance.

A "task-centric" network architecture not only requires a network to provide connection services, but also requires the network to perform collaboration and allocation of computational power, connections, algorithms, and data resources of network nodes to jointly achieve a specific goal. The 6G network provides computing services by introducing computational power, storage resources, and a mechanism for collaboration of computational power, algorithms, and data of a plurality of nodes.

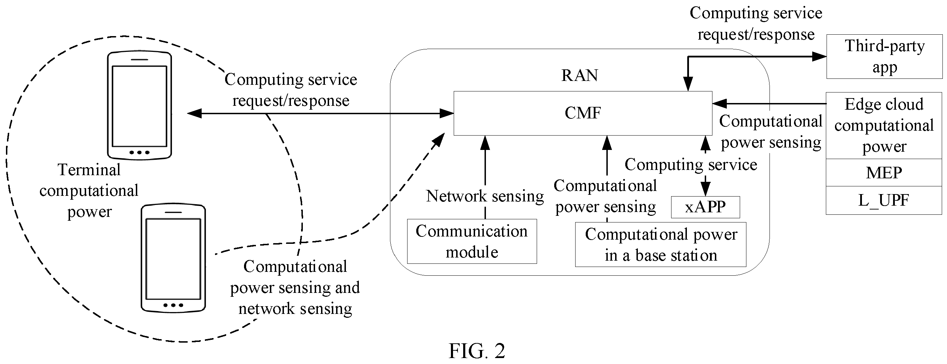

FIG. 2 shows an architecture of a computational power network that can be used to schedule computing tasks. Leveraging a connection capability of a wireless network and widely available computational power in the network, the computational power network provides high-performance computational power, low-delay transmission, and intelligent service assurance services for diversified computing services. In the architecture shown in FIG. 2, a terminal device or a third-party application may send a computing service request to a computing management function (computing management function, CMF) deployed on a RAN side. The CMF may perform functions such as computational power sensing, computing service sensing, network status sensing, and computing task scheduling based on the computing service request. The CMF may schedule a service initiated by a network element, an external network, or a third-party application to a compute node such as a terminal device, a mobile edge computing (mobile edge computing, MEC) platform, a cloud server, or a RAN device for execution.

In the foregoing process, the network needs to schedule the compute node to execute a computing task offloaded by the terminal device, and establish a data transmission tunnel between the compute node and the terminal device. However, it remains unclear currently how the network provides, based on different computing service requests of the terminal device, corresponding task allocations and corresponding data transmission configurations.

In view of this, embodiments of this application provide a communication method, so that the corresponding task allocations and the corresponding data transmission configurations may be provided for the different computing service requests of the terminal device.

To better understand embodiments of this application, the following several points are described before embodiments of this application.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by the indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but is not limited to one or a combination of at least two of radio resource control (radio resource control, RRC) signaling, MAC layer signaling, and physical layer signaling. The MAC layer signaling includes, for example, a MAC CE, and the physical (physical, PHY) layer signaling includes, for example, downlink control information (downlink control information, DCI).

Second, in embodiments of this application, "first", "second", and various numbers are merely for differentiation for ease of description, but are not intended to limit the scope of embodiments of this application. For example, different indication information is distinguished. For another example, first indication information and second indication information are merely used to distinguish between different indication information, and do not limit sequences of the first indication information and the second indication information. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Finally, network architectures and service scenarios that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

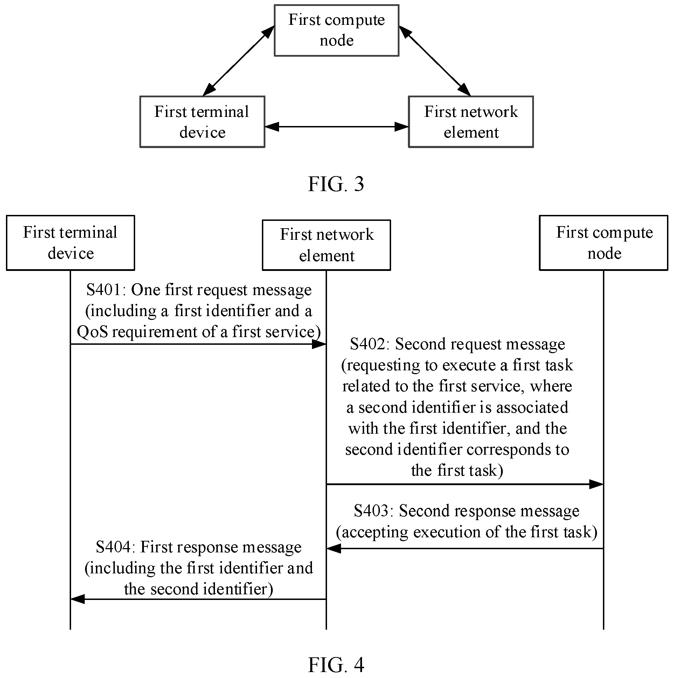

FIG. 3 is a diagram of an architecture of a communication system to which an embodiment of this application is applied. In an example, as shown in FIG. 3, the communication system includes a first terminal device, a first network element, and a first compute node. Any two of the first terminal device, the first network element, and the first compute node may communicate with each other. FIG. 3 shows an example of one terminal device and one compute node. A quantity of terminal devices and a quantity of compute nodes are not limited in this embodiment of this application. Terminal devices may communicate with each other, and compute nodes may also communicate with each other.

In this embodiment of this application, a first service may be a computing service, a data service, or the like. This is not limited herein. The first compute node may be a communication apparatus or a device that has a computing capability in the communication system. For example, the compute node may be a terminal device, an access network device, a core network device, an MEC platform deployed at a network edge, or an application server deployed in a data network (data network, DN). This is not limited herein.

For example, the first terminal device sends a first request to the first network element; and correspondingly, the first network element receives the first request from the first terminal device. The first request is used to request to provide the first service, the first request includes a first identifier and a QoS requirement of the first service, the first identifier is used to distinguish between a plurality of first requests, and the plurality of first requests respectively correspond to different first identifiers. Then, the first network element sends a second request to the first compute node based on the first request; and correspondingly, the first compute node receives the second request from the first network element, and sends a second response to the first network element based on the second request. The second request is used to request the first compute node to execute a first task related to the first service, the second request includes a second identifier, the second identifier is used to identify the first task, and the second response indicates that the first compute node accepts the first task. Further, the first network element sends a first response to the first terminal device based on the second response; and correspondingly, the first terminal device receives the first response from the first network element. The first response indicates to accept the first service, and the first response includes the first identifier and the second identifier associated with the first identifier. For a specific implementation process, refer to related descriptions in the following method embodiments. Details are not described herein again.

It should be understood that, in this embodiment of this application, there may be one or more compute nodes scheduled by the first network element to execute the first task. In the following embodiments, an example in which a scheduled compute node is a first compute node is used for description. The first compute node may be any one of at least one compute node scheduled by the first network element.

The following separately describes a communication device and a network element in embodiments of this application.

### 1. Terminal device

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), an intelligent robot, a robot arm, workshop equipment, a wireless terminal in self driving, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, a flight device (for example, an intelligent robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal function. For example, the terminal device may alternatively be a device that functions as a terminal in D2D communication.

In embodiments of this application, a form of the terminal device is not limited. An apparatus configured to implement a function of the terminal device may be a terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete device.

### 2. Access network device

There may be a plurality of access network devices, for example, a first access network device, a second access network device, and a third access network device. The access network device may also be referred to as an access network node, a RAN node, a RAN entity, an access node, or the like, is located on a network side of the communication system, to help the terminal device implement radio access, and is a device having a wireless transceiver function, or may be disposed in a chip or a chip system of the device. The access network device includes but is not limited to a base station (base station), an evolved NodeB (evolved NodeB, eNodeB), an access point (access point, AP), a transmission reception point (transmission reception point, TRP; or transmission point, TP), a next-generation NodeB (next-generation NodeB, gNB), a next-generation base station in a 6G mobile communication system, a base station in a future mobile communication system, an access node in a Wi-Fi system, or the like. The access network device may be a macro base station, a micro base station or an indoor base station, a relay node or a donor node, an open radio access network (open radio access network, ORAN), or a radio controller in a centralized radio access network (centralized radio access network, CRAN) scenario. Alternatively, the access network device may be one antenna panel or a group of antenna panels (including a plurality of antenna panels) of a base station in 5G, or may be a network node that forms a gNB, a TRP, a TP, or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), or a road side unit (road side unit, RSU) having a base station function. Optionally, the access network device may alternatively be a server, a wearable device, a vehicle, a vehicle-mounted device, or the like. For example, an access network device in a V2X technology may be an RSU. All or a part of functions of the network device in this application may alternatively be implemented through a software function running on hardware, or implemented through a virtualized function instantiated on a platform (for example, a cloud platform). The access network device in this application may alternatively be a logical node, a logical module, or software that can implement all or the part of the functions of the access network device.

The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus that can support the access network device in implementing the function, for example, a chip system. The apparatus may be mounted in the access network device or used in cooperation with the access network device.

### 3. First network element

The first network element is responsible for accepting a computing service request and scheduling a computing task, and may have one or more of the following functions: computational power sensing, computing service sensing, network status sensing, or computing task scheduling, to orchestrate and manage computational power resources. In embodiments of this application, the first network element may be deployed in an access network, or may be independently deployed with an access network device, or may be embedded in an access network device, for example, embedded in a CU or a DU in the access network device, or may be deployed in a core network. This is not limited herein. For example, the first network element may be a task management function (task management function, TMF), or may be the CMF in FIG. 2 above.

It should be understood that the communication system shown in FIG. 3 may further include another core network element, another terminal device, another access network device, or the like, for example, a user plane network element, an access and mobility management network element, a session management network element, a data management network element, a policy control network element, or a network data analysis network element. This is not limited herein. The user plane network element may be a UPF in 5G communication, the access and mobility management network element may be an access and mobility management function (access and mobility management function, AMF) in a 5G system, the session management network element may be a session management function (session management function, SMF) in the 5G system, the data management network element may be a unified data management (unified data management, UDM) function in the 5G system, the policy control network element may be a policy control function (policy control function, PCF) in the 5G system, and the network data analysis network element may be a network data analytic function (network data analytic function, NWDAF) in the 5G system.

It should be understood that, in embodiments of this application, names of nodes, modules, devices, or network elements in different scenarios, architectures, or systems, and names of communication interfaces between any two of the node, the module, the device, or the network element are provided as examples, and a possibility of a name change in a future communication system, scenario, or architecture is not excluded.

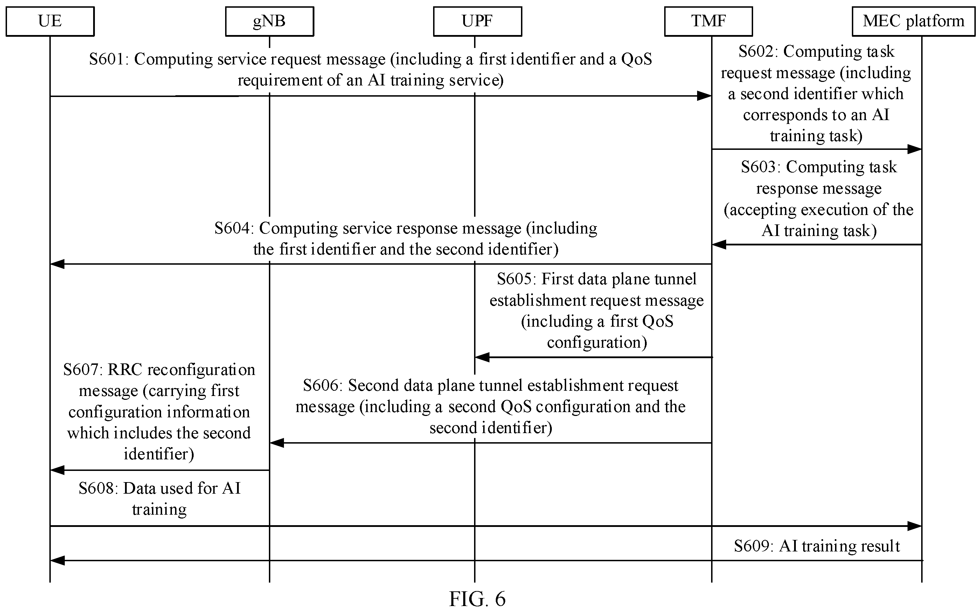

The following describes in detail a communication method provided in embodiments of this application with reference to FIG. 4 and FIG. 6.

For example, FIG. 4 is a schematic flowchart of a communication method according to an embodiment of this application. The communication method is described by using an example in which the first terminal device, the first network element, and the first compute node in FIG. 3 communicate with one another. Certainly, a body that performs an action of the first terminal device in the method may alternatively be an apparatus/module in the first terminal device, for example, a chip, a processor, or a processing unit in the first terminal device. A body that performs an action of the first network element in the method may alternatively be an apparatus/module in the first network element, for example, a chip, a processor, or a processing unit in the first network element. A body that performs an action of the first compute node in the method may alternatively be an apparatus/module in the first compute node, for example, a chip, a processor, or a processing unit in the first compute node. This is not specifically limited in this embodiment of this application.

For example, as shown in FIG. 4, the communication method includes the following steps.

S401: The first terminal device sends at least one first request message to the first network element; and correspondingly, the first network element receives the at least one first request message from the first terminal device.

The first request message is a service request initiated by the first terminal device. For example, one first request message in the at least one first request message is used to request a first service, or each or any one of the at least one first request message is used to request a first service. In other words, the first terminal device may send one or more first request messages to the first network element, to request the first network element to provide a service for the first terminal device.

It should be noted that, in this embodiment of this application, that the first terminal device sends the at least one first request message mainly means that the first terminal device sends one first request message at a single time. A quantity of first request messages sent is equivalent to a quantity of times of sending a first request message. In some possible scenarios, that the first terminal device sends the at least one first request message may mean that the first terminal device sends the one or more first request messages at a single time.

For example, the first service may include two types. One type is a computing service, for example, an AI inference service, an AI training service, or an AR rendering service. The first service of this type mainly has computational power and transmission requirements for a scheduled compute node. A service providing process of the first service of this type may include: The first network element allocates a computing task related to the first service to the scheduled compute node; and the compute node executes the computing task related to the first service, and sends a result of the computing task to the first terminal device. For example, if the first service is an AI inference service, the computing task may be an AI inference task. The other type is a data service, for example, a sensing service, a positioning service, or an AI model providing service. The first service of this type mainly has a transmission requirement for a scheduled compute node. A service providing process of the first service of this type may include: The first network element allocates a data task related to the first service to the scheduled compute node; and the compute node obtains data or an AI model related to the data task, and sends the data or the AI model to the first terminal device. The data task may be sensing measurement, positioning measurement, or the like.

It should be understood that, in addition to the foregoing two types of the service, the first service may be a first service of another type. This is not limited herein. In addition, first services respectively corresponding to the plurality of first request messages initiated by the first terminal device may be the same, or may be different, or may be partially the same, or may be partially different. This is not limited herein. For example, for a first request message 1 and a first request message 2 initiated by the first terminal device, both a first service requested by the first request message 1 and a first service requested by the first request message 2 may be an AR rendering service; or a first service requested by the first request message 1 is an AR rendering service, and a first service requested by the first request message 2 is an AI model training service.

For the at least one first request message initiated by the first terminal device, the first request message includes a first identifier and a QoS requirement of the first service (which may be referred to as a service QoS requirement). The first identifier corresponds to the first request message. In this embodiment of this application, the first identifier may be one identifier (identity, ID) allocated by the first terminal device (or a client application on the first terminal device) for one first request message initiated each time. Each or any one of the at least one first request message initiated by the first terminal device corresponds to one first identifier, and the first identifier may be used to uniquely identify the first request message initiated by the first terminal device each time. In other words, the plurality of first request messages correspond to a plurality of different first identifiers, and the first identifiers may be used to distinguish between the plurality of first request messages. It should be understood that the different first identifiers may mean that values of the first identifiers are different.

In a possible design, the first identifier may be represented by using a special number; and a number length, an arrangement order, a number magnitude, and the like may be preconfigured or predefined in a protocol, or may be configured by a network. This is not limited herein.

For example, the first terminal device uses an accurate moment at which a first request message is initiated each time as a first identifier of the first request message initiated this time. If the first terminal device initiates one first request message at 09:21:13 on October 19, 2023, for example, the first request message 1 in the foregoing example, and initiates one first request message at 23:24:25 on October 19, 2023, for example, the first request message 2 in the foregoing example, a first identifier corresponding to the first request message 1 may be represented as 20231019092113, and a first identifier corresponding to the first request message 2 may be represented as 20231019232425. In this way, the first identifier may be used to identify or distinguish between first request messages sent by the first terminal device at different moments, or used to identify or distinguish between the plurality of first request messages sent by the first terminal device.

The QoS requirement of the first service indicates a quality of service requirement of the first terminal device for completing the first service, or is used to ensure quality of service of the first service, and is used as a basis for the first network element to schedule the compute node. Different first services correspond to different QoS requirements. The QoS requirement may be QoS for a service, or may be a QoS requirement for a type of services. This is not limited herein.

In this embodiment of this application, the QoS requirement of the first service may be generated by the first terminal device, or may be obtained by the first terminal device from a core network element (for example, a policy control network element). This is not limited herein. The QoS requirement of the first service may include a communication QoS requirement and/or a computing QoS requirement. The communication QoS requirement may include a transmission delay requirement, a transmission reliability requirement, and the like. The transmission delay requirement may include a time requirement for completing data transmission related to the first service. The transmission reliability requirement may include a requirement for a bit error rate, jitter, a packet loss rate, and the like of transmission. For example, the communication QoS requirement may be represented by a 5G QoS identifier (5G QoS identifier, 5QI) communication parameter defined by 5G NR. For example, the communication QoS requirement may include an uplink/downlink packet delay budget (packet delay budget uplink/downlink, UL/DL PDB), a guaranteed bit rate (guaranteed bit rate, GBR), a maximum burst data volume (maximum data burst volume, MDBV), and a packet error rate (packet error rate, PER), to indicate a communication requirement.

The computing QoS requirement is mainly used to represent a QoS requirement for computational power of the compute node. The computing QoS requirement may include requirements for computing load (or payload, payload), a computing delay, computing energy consumption, computing precision, and the like.

The computing load requirement may indicate (or reflect or represent) a requirement for a computing capability of the compute node, and may be expressed as a requirement for an operating capability of a processor. The operating capability of the processor may include a quantity of operations that may be performed by the processor per second (second, s) (operations per second, OPS), a quantity of floating-point operations performed per second (floating-point operations per second, FLOPS), a model of the processor, a memory capacity, an input/output (in/out, I/O) speed, a dominant frequency, or the like. For example, the computing load requirement includes a hertz (hertz, Hz) or gigahertz (gigahertz, GHz) value that the dominant frequency needs to reach, a quantity of gigabits per second (Gbits/s) that a quantity of input/output operations per second (input/output operations per second, IOPS) needs to reach, and a quantity of bytes of a required memory capacity.

The computing delay requirement may indicate (or reflect or represent) a duration requirement for completing a computing task, for example, a time period in which the computing task needs to be completed.

The computing energy consumption requirement may also indicate (or reflect or represent) a requirement for computing power consumption, and may be a requirement for power or energy consumed by a device that executes a computing task. For example, the computing task may be executed by an access network device. The computing power consumption requirement may include a computing power consumption requirement for the access network device, the computing power consumption requirement for the access network device may be a requirement for average computing power consumption of the access network device for executing a task in a period of time, and duration for calculating the average computing power consumption may be predefined or preconfigured. Alternatively, the computing power consumption requirement may be a requirement for computing power consumption of the access network device in completing processing once or in short time (for example, processing one video frame or one task). The computing power consumption may alternatively be converted into a corresponding computing energy consumption indicator whose unit may be a convertible unit like watts or joules.

The computing precision requirement may indicate (or reflect or represent) a requirement for an error between a computation result and a real result. For example, the error does not exceed 5%. Alternatively, the computing precision requirement may be an accuracy requirement for an inference/training result obtained through inference or training by using an AI model/algorithm.

It should be understood that the first request message may further include an identifier of the first service, which is used by the first network element to identify a specific first service requested by the first terminal device, and indicates information for requesting the first service.

In a possible implementation, the first request message may further carry information used to implement data transmission related to the first service. For example, the first request message may further include second information, and the second information may include at least one of the following: an internet protocol (internet protocol, IP) address of the first terminal device, an application port number of the first terminal device, or a data transmission protocol type corresponding to the first service.

The IP address of the first terminal device is used to determine a location of the first terminal device, the application port number of the first terminal device is an application port number that corresponds to an application related to the first service and that is on the first terminal device, and the IP address of the first terminal device and the application port number of the first terminal device may be used by a compute node (for example, the first compute node below) scheduled by the first network element to accurately locate the first terminal device and transmit data related to the first service to the first terminal device.

The data transmission protocol type corresponding to the first service indicates a protocol used when the data related to the first service is transmitted. The data transmission protocol type may include a transmission control protocol (transmission control protocol, TCP) type, a user datagram protocol (user datagram protocol, UDP) type, or the like. In some possible scenarios, the data transmission protocol type corresponding to the first service may be predefined or preconfigured. In this case, the first request message may not carry the data transmission protocol type corresponding to the first service.

In this implementation, after completing selection of compute nodes, the first network element may send the second information to a selected compute node. For example, the first network element sends the second information to the first compute node; and correspondingly, the first compute node receives the second information from the first network element.

It should be understood that the first request message may reuse a message defined in an existing protocol or an existing implementation. A type of the first request message is related to a deployment situation of the first network element. For example, if the first network element is deployed on an access network device to which the first terminal device belongs, the first request message may be an RRC message, a MAC message, or the like. For another example, if the first network element is deployed on a session management network element in a core network, the first request message may be a PDU session establishment request message or the like. This is not limited herein. The first request message may alternatively be a newly defined message, for example, a computing service request message or a service request message. This is not limited herein.

S402: The first network element sends a second request message to the first compute node based on the first request message; and correspondingly, the first compute node receives the second request message from the first network element.

After receiving the first request message, the first network element initiates, based on the first request message, the corresponding second request message. A quantity of second request messages is related to a quantity of compute nodes scheduled by the first network element. In this embodiment of this application, an example in which one scheduled compute node is the first compute node is used, and the second request message is used to request the first compute node to execute a first task related to the first service.

The first task may be any one of one or more tasks associated with the first service. It may be understood that the first service is implemented based on the one or more tasks associated. For a plurality of different first tasks associated with the first service, each first task corresponds to one QoS requirement. A QoS requirement of the first task may be determined based on the QoS requirement of the first service. The first network element may schedule, based on the QoS requirement of each first task, a compute node to execute a corresponding first task.

For example, for the first request message 1 in the foregoing example, the first service is an AR rendering service, and a first task associated with the AR rendering service may include a task 1, a task 2, and a task 3. The first network element may select, with reference to a sensed computational power status of each compute node in a network, a status of a network between each compute node and the first terminal device, a status of a network between compute nodes, and the like, compute nodes that meet the QoS requirement of the first task to execute corresponding first tasks, and separately send corresponding second request messages to selected three compute nodes (including the first compute node).

In a possible implementation, the one or more first tasks associated with the first service may be obtained by the first network element by dividing tasks for implementing the first service. In this implementation, the QoS requirement of each first task may be determined by the first network element based on the QoS requirement of the first service.

In another possible implementation, the one or more first tasks associated with the first service may alternatively be obtained by the first terminal device by dividing tasks for implementing the first service. In this implementation, the QoS requirement of the first service may include a QoS requirement separately corresponding to the one or more first tasks, a second identifier of each first task may be allocated by the first terminal device, and the first request message may include the second identifier of each second task.

For the first request message, the second request message sent by the first network element to the first compute node includes the second identifier, the second identifier corresponds to the first task, and the second identifier is associated with the first identifier corresponding to the first request message. There may be the following two designs in which the second identifier corresponds to the first task.

Design 1: The second identifier is used to identify one first task, and different first tasks correspond to different second identifiers. In other words, the first network element allocates one second identifier to each different first task. In Design 1, if first tasks in a plurality of second request messages sent by the first network element are the same, second identifiers in the plurality of second request messages are the same.

In a possible scenario, if first services requested by two first request messages received by the first network element are the same, first tasks obtained through division by the first network element may be the same for the first services requested by the two first request messages. In this case, for the two first request messages, second identifiers in the two second request messages separately sent by the first network element to the first compute node may be the same, or second identifiers in the second request messages respectively sent by the first network element to two different compute nodes (for example, the first compute node and a second compute node) may be the same.

In a specific example, still with reference to the foregoing example, if the first service requested by the first request message 1 is associated with the task 1 to the task 3, the first network element may allocate one second identifier to each of the task 1 to the task 3. For example, if the second identifier of the task 1 is a task 1 ID, the second identifier of the task 2 is a task 2 ID, and the second identifier of the task 3 is a task 3 ID, the task 1 ID to the task 3 ID are associated with the first identifier (for example, 20231019092113 in the foregoing example) of the first request message 1, and the first network element may separately send the corresponding second request messages to the three compute nodes (including the first compute node) for the first request message 1. For example, if the second request message corresponding to the first compute node is used to request the first compute node to execute the task 1, the second request message includes the task 1 ID.

For Design 1 above, in a possible implementation, there is a correspondence (referred to as a first correspondence) between the QoS requirement of the first task and the second identifier, and the first correspondence may be preconfigured in the first network element in a form of a table. For example, the first correspondence is shown in Table 1 below. The first service is associated with the three first tasks (the task 1 to the task 3), and the QoS requirement of each first task corresponds to one second identifier. In other words, the first correspondence includes correspondences of second identifiers respectively corresponding to the plurality of first tasks. In this way, the first network element may determine, from the first correspondence based on the obtained QoS requirement of the first task, the second identifier corresponding to the first task.

**Table 1**

| QoS requirement of the first task associated with the first service | Second identifier |
|---|---|
| QoS requirement of the task 1 | Task 1 ID |
| QoS requirement of the task 2 | Task 2 ID |
| QoS requirement of the task 3 | Task 3 ID |

It should be understood that, for different first services, the first network element may store correspondences between QoS requirements of first tasks associated with a plurality of different first services and second identifiers.

Design 2: The second identifier is used to identify a first task in one second request message. In Design 2, the second identifier is used to identify a specific second request message corresponding to the first task, the second identifier identifies both one second request message and one first task, and the second identifier is used to uniquely identify the first task in the second request message. In other words, the first network element allocates one second identifier to the second request message corresponding to the first task related to the first service requested by the received one first request message. It may be understood that the second identifier is used to identify the second request message. In this way, regardless of whether the first network element is for the first request service, or for a plurality of first request messages requesting a same first service, or for a plurality of first request messages requesting different first services, all second identifiers in the plurality of second request messages sent by the first network element are different.

In a specific example, still with reference to the foregoing example, the first service requested by the first request message 1 is associated with the task 1 to the task 3. For the task 1 to the task 3, the first network element respectively sends corresponding second request messages 1 to 3 to three compute nodes. For example, a compute node 1 corresponds to the second request message 1, the second request message 1 is used to request the compute node 1 to execute the task 1, and the second request message 1 includes a Msg-Task 1 ID used to identify the second request message 1 and the task 1. A compute node 2 corresponds to the second request message 2, the second request message 2 is used to request the compute node 2 to execute the task 2, and the second request message 2 includes a Msg-Task 2 ID used to identify the second request message 2 and the task 2. A compute node 3 corresponds to the second request message 2, the second request message 3 is used to request the compute node 3 to execute the task 3, and the second request message 3 includes a Msg-Task 3 ID used to identify the second request message 3 and the task 3. In this way, the Msg-Task 1 ID to the Msg-Task 3 ID are associated with the first identifier (for example, 20231019092113 in the foregoing example) of the first request message 1. For example, if the second request message corresponding to the first compute node is the second request message 1, the second request message includes the Msg-Task 1 ID, used to identify a first task in the second request message 1.

Optionally, the second request message may further include the QoS requirement of the first task, so that the first compute node may determine, based on the QoS requirement of the first task, whether to accept (accept) execution of the first task. In addition, after determining that execution of the first task may be accepted, the first compute node may transmit data related to the first task based on the QoS requirement of the first task, to ensure QoS of the first service. For a specific implementation process, refer to the related description in S403 below. Details are not described herein again.

In some possible scenarios, the first correspondence is alternatively preconfigured in the first compute node. In this case, the second request message may not carry the QoS requirement of the first task, and the first compute node may determine the QoS requirement of the first task based on the second identifier and the first correspondence, to execute the first task.

S403: The first compute node sends a second response message to the first network element based on the second request message; and correspondingly, the first network element receives the second response message from the first compute node.

The second response message may be a response message of the second request message in S402 above. In this embodiment of this application, after receiving the second request message, the first compute node may determine, based on the QoS requirement of the first task in the second request message, whether to accept execution of the first task, and send the second response message to the first network element. The second response message indicates whether the first compute node accepts execution of the first task.

If the first compute node accepts execution of the first task, the second response indicates that the first compute node accepts execution of the first task; or if the first compute node does not accept execution of the first task, the second response indicates that the first compute node does not accept execution of the first task.

In a possible implementation, the second response carries first indication information. The first indication information indicates whether the first compute node accepts execution of the first task. The first indication information may be indicated by using one bit. A bit value 1 indicates that execution of the first task is accepted, and a bit value 0 indicates that execution of the first task is not accepted; or a bit value 0 indicates that execution of the first task is accepted, and a bit value 1 indicates that execution of the first task is not accepted. This is not limited herein.

For example, the first compute node may determine, based on the QoS requirement of the first task, a current network status, a compute resource usage, and an estimated compute resource usage in a future period of time, whether the first task in the currently received first request can be accepted. If determining that there are sufficient compute resources that can be used currently and in a future period of time, the first compute node accepts the first task, and reserves sufficient compute resources for executing the first task. The compute resource usage may include usages of various processors, memories, disks, network bandwidths, power supplies, and the like, for example, a resource usage ratio, a total resource utilization rate, or a current process quantity. The various processors include a central processing unit (central processing unit, CPU), a graphics processing unit (graphics processing unit, GPU), a neural network processing unit (neural network processing unit, NPU), a tensor processing unit (tensor processing unit, TPU), and the like.

When the first compute node does not accept execution of the first task, the first network element may reselect another compute node to send the second request message until a compute node that may accept execution of the first task is found. In this embodiment of this application, an example in which the first compute node accepts execution of the first task is used for description.

In a possible implementation, the second response message may further include information about the first compute node, the information about the first compute node may include an IP address of the first compute node and/or an application port number of the first compute node, and the information about the first compute node is used to perform filtering and mapping on data of the first task. In this implementation, the information about the first compute node can be used by a node or a device that transmits the data of the first task to locate the first compute node, and can be used to perform filtering and mapping on the transmitted data of the first task. For example, the first network element may include the obtained information about the first compute node in a first response message in S404 below, and send the first response message to the first terminal device; or may include the obtained information about the first compute node in another message, and send the another message to the first terminal device, so that the first terminal device may learn of the IP address and the application port number of the first compute node, to screen for the data of the first task from the first compute node in the future, and accurately send the data of the first task to the first compute node.

Optionally, the second response message may further include a QoS flow template (QoS flow template), and the QoS flow template is used to perform filtering and mapping on the data of the first task. The QoS flow template includes filtering and mapping rules respectively corresponding to a plurality of different parameter groups. Filtering and mapping rules corresponding to a same parameter group may include a filtering and mapping rule for uplink data, a filtering and mapping rule for downlink data, and a filtering and mapping rule applied to bidirectional data transmission. In addition, the plurality of different parameter groups include a first parameter group. A filtering and mapping rule corresponding to the first parameter group is used to perform filtering and mapping on the data of the first task between the first terminal device and the first compute node. The first parameter group includes the IP address of the first terminal device, the application port number of the first terminal device, the IP address of the first compute node, the application port number of the first compute node, and the data transmission protocol type corresponding to the first service.

For example, the QoS flow template is specifically used to filter and map an IP data flow of the first task into a first QoS flow, or the QoS flow template is used to filter an IP data flow of the first task as a service data flow (service data flow, SDF), and then map the SDF to a first QoS flow. The first QoS flow is a QoS flow corresponding to the first task.

In other words, each parameter group in the QoS flow template includes an IP address of a transmit end device, an application port number of the transmit end device, an IP address of a receive end device, an application port number of the receive end device, and a data transmission protocol type between the transmit end device and the receive end device, and is a 5-tuple parameter group. Different parameter groups correspond to different filtering and mapping rules. It should be understood that, during uplink transmission, the first terminal device serves as a transmit end device, and the first compute node serves as a receive end device; and during downlink transmission, the first terminal device serves as a receive end device, and the first compute node serves as a transmit end device.

In this way, the QoS flow template may be generated by the first compute node and sent to the first network element. After obtaining the QoS flow template, the first network element may send the QoS flow template to a transmission node configured to complete transmission of the data of the first task between the first terminal device and the first compute node. The transmission node includes the first terminal device. In addition, based on different types of selected first compute nodes, the transmission node may further include an access network device to which the first terminal device belongs, a user plane network element, and the like. This is not limited herein. For specific implementation, refer to related descriptions in a scenario 1 and a scenario 2 below. This is not limited herein.

S404: The first network element sends the first response message to the first terminal device based on the second response message; and correspondingly, the first terminal device receives the first response message from the first network element.

The first response message may be a response message of the first request message in S401 above. In this embodiment of this application, the first response message indicates to provide the first service, and the first response message includes the first identifier and the second identifier. In other words, for a first service requested by one first request message initiated by the first terminal device at a time, the first network element notifies, via the first response message, the first terminal device of a second identifier allocated to the first service requested this time, so that the first terminal device may obtain the second identifier associated with the first identifier corresponding to the first request message, to determine a specific first request message that requests a first service for which subsequently received transmission configuration information and subsequently received data are intended.

For example, after receiving the second response message, the first network element may determine, based on the second response message, that the first compute node can execute the first task. If the first network element schedules a plurality of compute nodes to execute a plurality of first tasks related to the first service, after the first network element receives second response messages corresponding to all the scheduled compute nodes, it may be determined that all the first tasks related to the first service can be executed by the compute nodes. In this case, the first network element may send the first response message to the first terminal device, to notify the first terminal device that a first service requested by a specific first request message initiated by the first terminal device is provided.

Optionally, the first response message may further include the information about the first compute node and/or the QoS flow template. The information about the first compute node includes the IP address of the first compute node and/or the application port number of the first compute node, and the information about the first compute node and/or the QoS flow template are/is used to perform filtering and mapping on the data of the first task. In this way, the first terminal device may perform filtering and mapping on the data of the first task based on the information about the first compute node and/or the QoS flow template.

In some possible scenarios, the QoS flow template may be obtained by the first terminal device from the session management network element, or the QoS flow template may be generated by the first terminal device based on received downlink data as uplink data. This is not limited herein. In this case, the first response message may not carry the QoS flow template.

In this way, based on the foregoing process, the first terminal device may obtain the second identifier associated with each of the at least one first request message initiated. For example, the first terminal device obtains second identifiers respectively associated with two first request messages from the first network element. For example, second identifiers associated with a first identifier corresponding to a first request message 1 are a task 1 ID, a task 2 ID, and a task 3 ID, and second identifiers associated with a first identifier corresponding to a second request message 2 are a task 4 ID and a task 5 ID. In this way, the first terminal device may determine, based on the second identifier associated with each first identifier, a specific first request message that requests a first service for which subsequently received transmission configuration information and transmission data are intended.

For the first service requested by the first request message, there are the following two scenarios in a data transmission configuration and a data transmission process between the first terminal device and the first compute node.

In a possible scenario 1, the first compute node transmits the data of the first task to the first terminal device by using a radio bearer, without transmitting the data of the first task to the first terminal device via a user plane. For example, the first compute node may be a second terminal device or an access network device to which the first terminal device belongs, and the second terminal device is different from the first terminal device.

In the scenario 1, after the first compute node determines to accept execution of the first task, the first compute node may establish a transmission configuration with the first terminal device. In a possible design, the first compute node may send first configuration information to the first terminal device; and correspondingly, the first terminal device receives the first configuration information from the first compute node. The first configuration information is used to configure the first terminal device to establish a radio bearer with the first compute node for transmitting the data of the first task, the first configuration information includes the second identifier, and the second identifier may be used to identify that the first configuration information is a radio bearer corresponding to a first service requested by a specific first request message initiated by the first terminal device.

It should be understood that, when the first compute node is a second terminal device, the first compute node communicates with the first terminal device by using a radio bearer of a sidelink; or when the first compute node is an access network device, the first compute node communicates with the first terminal device by using a radio bearer between Uu interfaces.

In a possible implementation, the first configuration information may be carried in an RRC message or MAC signaling for sending. For example, the first compute node may send an RRC reconfiguration message to the first terminal device. A drb-ToAddModList field in the RRC reconfiguration message carries the first configuration information. The first configuration information may be used to establish a corresponding packet data convergence protocol (packet data convergence protocol, PDCP) entity and configure a related security parameter, establish and configure a radio link control (radio link control, RLC) entity, establish and configure a dedicated traffic channel (dedicated traffic channel, DTCH) logical channel, and the like. Further, after completing establishment of the radio bearer based on the first configuration information, the first terminal device may send an RRC reconfiguration complete message to the first compute node, to indicate that establishment of the radio bearer is completed. In this embodiment of this application, the first configuration information may include an uplink radio bearer configuration and a downlink radio bearer configuration, and the radio bearer is mainly a DRB.

After the first terminal device receives the first configuration information, the first terminal device may determine, based on the second identifier in the first configuration information and the second identifier associated with the first identifier corresponding to the at least one first request message obtained by the first network element according to S404 above, a specific first identifier associated with the second identifier in the first configuration information, to determine that the first configuration information is configuration information corresponding to a first service requested by a specific first request message that is sent.

With reference to the foregoing example, the first terminal device learns, from the first network element, that the second identifiers associated with the first identifier corresponding to the first request message 1 are the task 1 ID, the task 2 ID, and the task 3 ID, the second identifiers associated with the first identifier corresponding to the second request message 2 are the task 4 ID and the task 5 ID, and the second identifier in the first configuration information is the task 1 ID. In this case, the first terminal device may determine, based on the second identifier in the first configuration information and stored second identifiers associated with different first identifiers, that the first configuration information is the second identifier associated with the first identifier corresponding to the first request message 1. That is, the first configuration information is configuration information associated with the first identifier corresponding to the first request message 1, and is used to transmit data of a first task related to the first service requested by the first request message 1.

In this way, the first compute node and the first terminal device may transmit the data of the first task by using the radio bearer configured by the first configuration information. The following separately describes uplink transmission and downlink transmission.

For uplink transmission:
In a possible implementation 1, the first terminal device may map the IP data flow of the first task to the first QoS flow based on the first parameter group and/or the QoS flow template, to transmit the first QoS flow by using the radio bearer configured by the first configuration information. For specific descriptions of the first parameter group and the QoS flow template, refer to the related descriptions in S403 above. Details are not described herein again.

For example, the first terminal device may determine, from the QoS flow template based on the first parameter group, a corresponding filtering and mapping rule, and filter and map, into the first QoS flow based on the corresponding filtering and mapping rule, the IP data flow of the first task generated by an application (application, APP) on the first terminal device, so that the first terminal device transmits the first QoS flow to the first compute node by using the radio bearer configured by the first configuration information (where there is a mapping relationship between the first QoS flow and the radio bearer configured by the first configuration information). Alternatively, the IP data flow generated by an app on the first terminal device carries the first parameter group, and the first terminal device may determine, from the QoS flow template based on the first parameter group in the IP data flow, a corresponding filtering and mapping rule, and map the IP data flow to the first QoS transmitted by using the radio bearer configured by the first configuration information (where there is a mapping relationship between the first QoS flow and the radio bearer configured by the first configuration information).

In a possible implementation 2, the first terminal device may map the IP data flow of the first task to the first QoS flow based on the second identifier, and transmit the first QoS flow by using the radio bearer configured by the first configuration information; or the first terminal device may transmit the IP data flow of the first task by using the radio bearer configured by the first configuration information. The IP data flow of the first task includes the second identifier.

In other words, the first terminal device may include the second identifier in the generated (for example, generated by the app) IP data flow of the first task, and map, based on the second identifier, the IP data flow to the first QoS flow transmitted by using the radio bearer configured by the first configuration information (where there is a mapping relationship between the first QoS flow and the radio bearer configured by the first configuration information); or the first terminal device directly transmits the IP data flow based on the second identifier in the IP data flow by using the radio bearer that is configured by the first configuration information and that is associated with the second identifier, to send data for executing the first task to the first compute node.

For downlink transmission:
In a possible implementation, the first compute node may generate the IP data flow of the first task or the first QoS flow that carries the second identifier, and transmit the IP data flow of the first task or the first QoS flow by using the radio bearer that is configured by the first configuration information and that is associated with the second identifier. Alternatively, there is a mapping relationship between the first configuration information and the first QoS, and the first compute node may map the IP data flow of the first task to the first QoS flow transmitted by using the radio bearer configured by the first configuration information.

In a possible scenario 2, the first compute node needs to transmit the data of the first task to the first terminal device via a user plane. For example, the first compute node may be an application server or an MEC platform.

In this scenario, the first network element needs to trigger a user plane network element and the access network device to which the first terminal device belongs to establish a tunnel for transmitting the data of the first task. In a possible design, the first network element sends a third request message to the user plane network element; and correspondingly, the user plane network element receives the third request message from the first network element. The third request message is used to request the user plane network element to establish a tunnel with the access network device for transmitting the data of the first task, the third request message includes a first QoS configuration used to establish the tunnel, and the first QoS configuration is determined based on the QoS requirement of the first service.

In this way, after receiving the third request message, the user plane network element may establish the tunnel with the access network device based on the first QoS configuration in the third request message, for example, a general packet radio service (general packet radio service, GPRS) tunneling protocol user plane part protocol (user plane part of GPRS tunneling protocol, GTP-U) tunnel, which is referred to as an N3 tunnel. For example, the user plane network element may determine, based on the first QoS configuration, configuration information used to establish the tunnel, and send the configuration information used to establish the tunnel to the access network device. The configuration information used to establish the tunnel may include configuration information related to a routing priority, congestion avoidance, packet filtering, uplink or downlink rate control, and the like.

Optionally, the third request message may further include first information, and the first information indicates a filtering and mapping rule for transmitting the data of the first task. For example, the first information may include at least one of the following: application port information, the first parameter group, or the QoS flow template. The application port information includes the application port number of the first terminal device and the application port number of the first compute node. For specific descriptions of the first parameter group and the QoS flow template, refer to the related descriptions in S403 above. Details are not described herein again. It should be understood that the first information may not be carried in the third request message for sending, but is sent by the first network element by using another message.

In this way, the user plane network element may perform filtering and screening, based on the first information, on the data of the first task from the first compute node, so that data that is of the first task and that is sent by the first terminal device to the user plane network element can be accurately located.

In some possible scenarios, the user plane network element may alternatively obtain the QoS flow template from the session management network element, without obtaining the QoS flow template from the first network element. In addition, the application port information and the first parameter group may not be carried in the third request message for sending, but may be sent by the first network element by using another message, or may be preconfigured in the user plane network element.

In addition, the first network element further sends a fourth request message to the access network device; and correspondingly, the access network device receives the fourth request message from the first network element. The fourth request message is used to request the access network device to establish a radio bearer with the first terminal device for transmitting the data of the first task, the fourth request message includes a second QoS configuration used to establish the radio bearer and the second identifier, and the second QoS configuration is determined based on the QoS requirement of the first service.

Further, the access network device may send second configuration information to the first terminal device based on the second QoS configuration in the fourth request message; and correspondingly, the first terminal device receives the second configuration information from the access network device. The second configuration information is used to configure the first terminal device to establish a radio bearer with the access network device for transmitting the data of the first task. The second configuration information includes the second identifier. For a specific description of the second configuration information, refer to the related description of the first configuration information. Details are not described herein again. In some scenarios, the second configuration information is the first configuration information.

After a data transmission tunnel between the user plane network element and the access network device and a data transmission tunnel between the access network device and the first terminal device are established based on the foregoing process, the first compute node and the first terminal device transmit the data of the first task based on the established data transmission tunnels.

In the scenario 2, uplink transmission and uplink transmission still exist. The following separately describes uplink transmission and downlink transmission.

For uplink transmission:
A specific process in which the first terminal device sends the data of the first task to the access network device by using the radio bearer configured by the second configuration information is similar to a process in which the first terminal device sends the data of the first task to the first compute node by using the radio bearer configured by the first configuration information in the scenario 1. Details are not described herein again. Further, after receiving the IP data flow of the first task or the first QoS flow, the access network device may transmit the IP data flow of the first task or the first QoS flow to the user plane network element through the tunnel between the access network device and the user plane network element; and then the user plane network element sends the IP data flow of the first task or the first QoS flow to the first compute node.

For downlink transmission:
In a possible implementation 1, the first compute node may send the IP data flow of the first task to the user plane network element. Correspondingly, after the user plane receives the IP data flow, the user plane network element may map the IP data flow of the first task to the first QoS flow based on the first parameter group and/or the QoS flow template, and transmit the first QoS flow to the access network device through the tunnel; and then the access network device transmits the first QoS flow to the first terminal device by using the radio bearer configured by the second configuration information.

Optionally, the IP data flow of the first task includes the first parameter group. In this case, the user plane network element may determine, from the QoS flow template based on the first parameter group in the IP data flow, the corresponding filtering and mapping rule, and map the IP data flow of the first task to the first QoS flow.

In a possible implementation 2, the first compute node may send the IP data flow that is of the first task and that carries the second identifier to the user plane network element. Correspondingly, after receiving the IP data flow of the first task, the user plane network element may map the IP data flow to the first QoS flow based on the second identifier in the IP data flow of the first task (where there is a mapping relationship between the second identifier and the first QoS flow), and transmit the first QoS flow to the access network device through the tunnel; and then the access network device transmits the first QoS flow to the first terminal device by using the radio bearer configured by the second configuration information.

Mapping the IP data flow of the first task to the first QoS flow may include: mapping the IP data flow of the first task to the SDF, and then mapping the SDF to the first QoS flow. In this embodiment of this application, the data that is of the first task and that is sent by the first terminal device may be input data used by the first compute node to execute the first task, and the data that is of the first task and that is sent by the first compute node may be an execution result obtained after the first compute node completes execution of the first task.

It can be learned from the foregoing two scenarios that the first terminal device needs to receive a radio bearer configuration to complete data transmission. However, because first compute nodes are different, a device that sends the radio bearer configuration may be the first compute node, or may not be the first compute node. Therefore, the foregoing devices that send the radio bearer configuration (for example, the first configuration information and the second configuration information) may be collectively referred to as a second device.

In some possible cases, the radio bearer configuration information may further include the first identifier. In this case, the first terminal device may determine, based on the first identifier and the second identifier, that the radio bearer configuration information is radio bearer configuration information corresponding to a specific first request message. During transmission of the IP data flow or the first QoS flow, both the first identifier and the second identifier may alternatively be carried in the IP data flow or the first QoS flow.

According to the communication method shown in FIG. 4, in a scenario in which the first terminal device sends the plurality of first request messages, the first network element associates the first identifier corresponding to any one of the plurality of first request messages sent by the first terminal device with the second identifier corresponding to the first task related to the first service requested by the first request message, and notifies the first terminal device, so that the first terminal device may determine, based on the second identifiers associated with the first identifiers corresponding to the different first request messages, a specific first request message that requests a first service for which a transmission configuration of the first task related to the first service is configured. In this way, the first network element may provide a corresponding task allocation and a corresponding data transmission configuration for each service request initiated by the first terminal device.

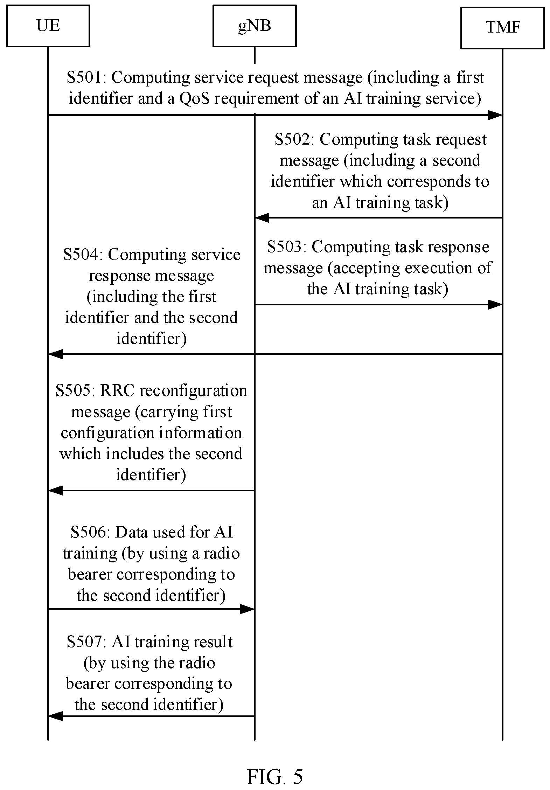

The following describes the communication method shown in FIG. 4 with reference to a specific application scenario. For example, the first compute node is a gNB, the first terminal device is UE, the first network element is a TMF, the first service is an AI training service, the first request message is a computing service request message, the first response message is a computing service response message, the second request message is a computing task request message, and the second response message is a computing task response message, to describe a computing service request initiated by the UE. As shown in FIG. 5, the communication method includes the following steps.

S501: The UE sends the computing service request (computing service request) message to the TMF; and correspondingly, the TMF receives the computing service request from the UE.

The computing service request message is used to request the AI training service. The computing service request message includes a first identifier and a QoS requirement of the AI training service. The first identifier corresponds to the computing service request message. That is, the first identifier is used to identify the computing service request message.

For example, if the UE sends the computing service request message at 09:21:13 on October 19, 2023 to request the AI training service, the first identifier corresponding to the computing service request may be represented as 20231019092113. The QoS requirement of the AI training service may include a communication QoS requirement such as a PDB and a GFBR requirement, and a computing QoS requirement such as a computing energy consumption requirement and a computing precision requirement.

It should be understood that the computing service request message may further include an IP address of the UE, an application port number corresponding to the first service, and the like, for subsequent data transmission.

S502: The TMF sends the computing task request (computing task request) message to the gNB; and correspondingly, the gNB receives the computing task request message from the TMF.

The computing task request message is used to request the gNB to execute an AI training task related to the AI training service, the computing task request includes a second identifier, the second identifier corresponds to the AI training task, and the second identifier is associated with the first identifier.

For example, after the TMF receives the computing service request message, the TMF may select, based on the QoS requirement of the AI training service and with reference to a sensed computational power status of each compute node in a network, a status of a network between each compute node and the UE, a status of a network between compute nodes, and the like, the gNB as a compute node for executing the AI training task related to the AI training service, allocate the corresponding second identifier to the AI training task, and associate the second identifier with the first identifier corresponding to the computing service request message in S501, to send the computing task request message to the gNB. In this case, the QoS requirement of the AI training service may be used as a QoS requirement of the AI training task. For a specific description of the second identifier, refer to the related description in S402 above. Details are not described herein again.

Optionally, the computing task request message may further include the QoS requirement of the AI training task.

S503: The gNB sends the computing task response (computing task response) message to the TMF; and correspondingly, the TMF receives the computing task response message from the gNB.

The computing task response message indicates that the gNB accepts execution of the AI training task.

For example, after receiving the computing task request message, the gNB may perform admission decision and resource reservation for the AI training task. For example, the gNB may determine, based on a current compute resource usage of the gNB and an estimated compute resource usage in a future period of time, whether to accept the currently received computing task request message. When the computing task request message is accepted, the gNB may send the computing task response message to the TMF, to indicate that the gNB accepts execution of the AI training task.

When the computing task request message is not accepted, the gNB may not send any information or message to the TMF. If the TMF does not receive a response from the gNB within a period of time, it may be considered that the gNB does not accept execution of the AI training task. Alternatively, the gNB may send the computing task response message to the TMF. In this case, the computing task response message indicates that the gNB does not accept execution of the AI training task. This is not limited.

S504: The TMF sends the computing service response (computing service response) message to the UE; and correspondingly, the UE receives the computing service response message from the TMF.

The computing service response message indicates to provide the AI training service, and the computing service response message includes the first identifier and the second identifier.

For example, after determining, based on the computing task response message, that the gNB accepts execution of the AI training task, the TMF may send the computing service response message to the UE to indicate that the AI training service requested by the corresponding computing service request message may be provided to the UE, and may include the second identifier associated with the first identifier of the corresponding computing service request message in the computing service response message.

S505: The gNB sends an RRC reconfiguration message to the UE; and correspondingly, the UE receives the RRC reconfiguration message from the gNB.

The RRC reconfiguration message carries first configuration information, the first configuration information includes the second identifier, and the first configuration information is used to configure the UE to establish a radio bearer with the gNB for transmitting data used for AI training.

For example, after the UE obtains a second identifier associated with one initiated computing service request message, the UE may determine whether an identifier carried in the first configuration information in the received RRC reconfiguration message is the second identifier associated with a first identifier of the recently initiated computing service request message. If the identifier is the associated second identifier, the UE may determine that the first configuration information is configuration information associated with the corresponding computing service request message. In this way, the UE may establish a radio bearer based on the first configuration information.

Further, after completing configuration of the radio bearer, the UE may send an RRC reconfiguration complete message to the gNB, to indicate that the configuration is completed.

S506: The UE sends the data used for AI training to the gNB by using the radio bearer configured by the first configuration information; and correspondingly, the gNB receives the data used for AI training from the UE by using the radio bearer configured by the first configuration information.

For example, after determining that the first configuration information is the configuration information associated with the corresponding first identifier, the UE may send the data used for AI training to the gNB by using the radio bearer configured by the first configuration information, and use the data used for AI training as input data for the gNB to execute the AI training task, to complete AI training and obtain an AI training result (for example, an AI inference model).

S507: The gNB sends the AI training result to the UE by using the radio bearer configured by the first configuration information; and correspondingly, the UE receives the AI training result from the gNB by using the radio bearer configured by the first configuration information.

Similarly, after completing the AI training task, the gNB may send the AI training result to the UE also by using the radio bearer configured by the first configuration information. In this way, the first service of the UE is provided.

In the scenario shown in FIG. 5, the TMF offloads the task of the UE to the gNB based on the computing service request message of the UE, data transmission needs to be implemented by the gNB, and the corresponding second identifier is allocated to the corresponding computing service request, so that the UE may be provided with corresponding task allocations and corresponding data transmission configurations for specific computing service requests.

For another example, the first compute node is an MEC platform, the first terminal device is UE, the first network element is a TMF, the user plane network element is a UPF, the access network device is a gNB, and the first service is an AI training service. As shown in FIG. 6, the communication method includes the following steps.

S601: The UE sends a computing service request message to the TMF; and correspondingly, the TMF receives the computing service request message from the UE.

The computing service request includes a first identifier and a QoS requirement of an AI training service. For a specific description of the computing service request message, refer to the related description in S501 above. Details are not described herein again.

S602: The TMF sends a computing task request message to the MEC platform; and correspondingly, the MEC platform receives the computing task request message from the TMF.

The computing task request message is used to request the MEC platform to execute an AI training task related to the AI training service, and the computing task request message includes a second identifier corresponding to the AI training task.

S603: The MEC platform sends a computing task response message to the TMF; and correspondingly, the TMF receives the computing task response message from the MEC platform.

The computing task response message indicates that the MEC platform accepts execution of the AI training task.

Because a compute node that executes the AI training task is the MEC platform, the MEC platform needs to communicate with the UE via a data plane. Therefore, the TMF needs to trigger the UPF and the gNB to establish a data plane tunnel, that is, by performing S605 and S606 below.

S604: The TMF sends a computing service response message to the UE; and correspondingly, the UE receives the computing service response message from the TMF.

The computing service response message indicates to provide the AI training service, and the computing service response message includes the first identifier and the second identifier.

For a specific implementation process of S602 to S604, refer to the implementation process of S502 to S504 above. Details are not described herein again.

S605: The TMF sends a first data plane tunnel establishment request message to the UPF; and correspondingly, the UPF receives the first data plane tunnel establishment request message from the TMF.

The first data plane tunnel establishment request message is used to request the UPF to establish a tunnel with the gNB, the first data plane tunnel establishment request message includes a first QoS configuration, and the first QoS configuration is configured based on the QoS requirement of the AI training service.

For example, the UPF may send, to the gNB based on the first data plane tunnel establishment request message, tunnel-establishment-related configuration information determined based on the first QoS configuration, to complete establishment of an N3 tunnel that is between the gNB and the UPF and that is used for transmitting data of the AI training task.

S606: The TMF sends a second data plane tunnel establishment request message to the gNB; and correspondingly, the gNB receives the second data plane tunnel establishment request message from the TMF.

The second data plane tunnel establishment request message is used to request the gNB to establish a radio bearer with the UE, and the second data plane tunnel establishment request message includes a second QoS configuration and the second identifier.

For example, the gNB may send, to the UE based on the second data plane tunnel establishment request message, the second QoS configuration, and the second identifier, a configuration of establishing a radio bearer used for transmitting the data of the AI training task, that is, by performing S607 below.

A sequence of performing S605 and S606 above is not limited in this embodiment of this application. S605 and S606 may be simultaneously performed; or S605 may be performed before S606; or S606 may be performed before S605. In addition, S605 and S606 may be performed before S604, or may be performed after S604. This is not limited herein.

S607: The gNB sends an RRC reconfiguration message to the UE; and correspondingly, the UE receives the RRC reconfiguration message from the gNB.

The RRC reconfiguration message carries first configuration information, the first configuration information includes the second identifier, and the first configuration information is used to configure the UE to establish a radio bearer with the gNB for transmitting the data of the AI training task. For a specific implementation process of S607, refer to the related description in S505 above. Details are not described herein again.

S608: The UE sends the data used for AI training to the MEC platform; and correspondingly, the MEC platform receives the data used for AI training from the UE.

For example, the UE first sends the data used for AI training to the gNB by using the radio bearer configured by the first configuration information. Correspondingly, the gNB receives the data used for AI training from the UE by using the radio bearer configured by the first configuration information.

In a possible implementation, the UE generates, in a form of an IP data flow, the data used for AI training, filters and maps the IP data flow into a first QoS flow by using IP 5-tuple information or a QoS flow, and then maps the first QoS flow to the radio bearer configured by the first configuration information, and transmits the first QoS flow to the gNB. The IP 5-tuple information is the first parameter group, and may include an IP address of the UE, an application port number of the UE, an IP address of the MEC platform, an application port number of the MEC platform, and a data transmission protocol type. The IP address of the MEC platform and the application port number of the MEC platform may be sent by the TMF to the UE, and the data transmission protocol type may be preconfigured, or selected by the UE. This is not limited herein. A QoS flow template may also be sent by the TMF to the UE, or may be obtained by the UE from an SMF in advance, or may be generated by the UE based on received downlink data as uplink data. This is not limited herein.

In another possible implementation, the UE generates, in a form of an IP data flow, the data used for AI training, includes the second identifier in the IP data flow, maps the IP data flow to a first QoS flow based on the second identifier, then maps the first QoS flow to the radio bearer configured by the first configuration information, and transmits the first QoS flow to the gNB, or directly transmits the IP data flow carrying the second identifier to the gNB by using the radio bearer configured by the first configuration information.

Further, after receiving the IP data flow or the first QoS flow that carries the data used for AI training, the gNB may send the IP data flow or the first QoS flow to the UPF through the N3 tunnel between the gNB and the UPF; and then the UPF sends the IP data flow or the first QoS flow to the MEC platform, so that the MEC platform may execute the AI training task based on the data used for AI training.

S609: The MEC platform sends an AI training result to the UE; and correspondingly, the UE receives the AI training result from the MEC platform.

For example, the MEC platform first sends the AI training result to the UPF.

In a possible implementation, the MEC platform may send the AI training result to the UPF in a form of an IP data flow, and include the second identifier in the IP data flow. In this way, the UPF may map the IP data flow to a first QoS flow based on the second identifier, and send the first QoS flow to the gNB through the N3 tunnel, or directly send the IP data flow carrying the second identifier to the gNB through the N3 tunnel.

In another possible implementation, the MEC platform may send the AI training result to the UPF in a form of an IP data flow, and include IP 5-tuple information in the IP data flow. In this way, the UPF may determine, from the QoS flow template based on the IP 5-tuple information, a corresponding filtering and mapping rule, map the IP data flow to the first QoS flow based on the corresponding filtering and mapping rule, and send the first QoS flow to the gNB through the N3 tunnel. The MEC platform may obtain the IP address of the UE, the application port number of the UE, and the data transmission protocol type from the TMF to form the IP 5-tuple information. The QoS flow template may be obtained by the UPF from the TMF, or may be obtained from the SMF in advance. This is not limited herein.

Further, the gNB may send the first QoS flow or the IP data flow that carries the AI training result to the UE by using the radio bearer configured by the first configuration information, to provide the first service.

In the scenario shown in FIG. 6, the TMF offloads the task of the UE to the MEC platform based on the computing service request message of the UE, data transmission needs to be implemented by the UPF and the gNB, and the corresponding second identifier is allocated to the corresponding computing service request, so that the UE may be provided with corresponding task allocations and data transmission configurations for specific computing service requests.

In the foregoing embodiments, the methods and/or steps implemented by the first network element may alternatively be implemented by a component (for example, a processor, a chip, a chip system, a circuit, a logical module, or software) that may be used in the first network element. The methods and/or steps implemented by the user plane network element may alternatively be implemented by a component (for example, a processor, a chip, a chip system, a circuit, a logical module, or software) that may be used in the user plane network element. The methods and/or steps implemented by the access network device may alternatively be implemented by a component (for example, a processor, a chip, a chip system, a circuit, a logical module, a DU, or software) that may be used in the access network device. For example, when the foregoing embodiments are performed by a DU in the access network device, a sending or receiving step performed by the access network device may be replaced with sending or receiving by the DU, and may further be sending by the DU to an RU or receiving by the DU from an RU. The methods and/or steps implemented by the first compute node may alternatively be implemented by a component (for example, a processor, a chip, a chip system, a circuit, a logical module, or software) that may be used in the first compute node. The methods and/or steps implemented by the first terminal device may alternatively be implemented by a component (for example, a processor, a chip, a chip system, a circuit, a logical module, or software) that may be used in the first terminal device.

The foregoing mainly describes the solutions provided in this application. Correspondingly, this application further provides a communication apparatus. The communication apparatus is configured to implement the methods in the foregoing method embodiments. The communication apparatus may be the first network element in the foregoing method embodiments, or an apparatus including the first network element, or a component that can be used in the first network element, for example, a chip or a chip system. Alternatively, the communication apparatus may be the user plane network element in the foregoing method embodiments, or an apparatus including the user plane network element, or a component that can be used in the user plane network element, for example, a chip or a chip system. Alternatively, the communication apparatus may be the access network device in the foregoing method embodiments, or an apparatus including the access network device, or a component that can be used in the access network device, for example, a chip or a chip system. Alternatively, the communication apparatus may be the first compute node in the foregoing method embodiments, or an apparatus including the first compute node, or a component that can be used in the first compute node, for example, a chip or a chip system. Alternatively, the communication apparatus may be the first terminal device in the foregoing method embodiments, or an apparatus including the first terminal device, or a component that can be used in the first terminal device, for example, a chip or a chip system.

In some embodiments, to implement the foregoing functions, the communication apparatus includes a corresponding hardware structure and/or software module for performing each function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, there may be another division manner.

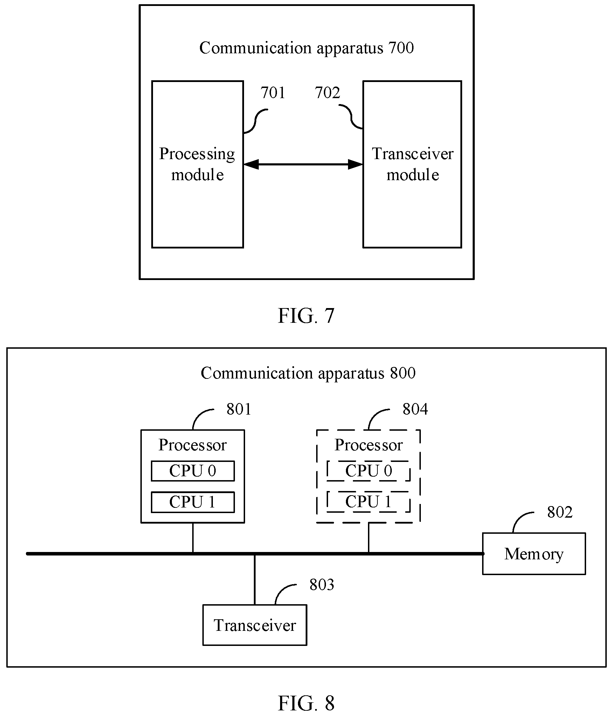

For example, the communication apparatus is the first network element, the first compute node, the first terminal device, or the access network device in the foregoing method embodiments. FIG. 7 is a diagram of a structure of a communication apparatus according to an embodiment of this application. As shown in FIG. 7, the communication apparatus 700 includes a processing module 701 and a transceiver module 702. The processing module 701 is configured to perform a processing function of the first network element, the first compute node, the first terminal device, or the access network device in the foregoing method embodiments. The transceiver module 702 is configured to perform a transceiver function of the first network element, the first compute node, the first terminal device, or the access network device in the foregoing method embodiments.

All related content of the steps in the foregoing method embodiments may be cited in function descriptions of the corresponding functional modules. Details are not described herein again.

The communication apparatus 700 provided in this embodiment may perform the foregoing methods. Therefore, for technical effects that can be achieved by the communication apparatus 700, refer to the foregoing method embodiments. Details are not described herein again.

In a possible design solution, in this embodiment of this application, the transceiver module 702 may include a receiving module and a sending module (not shown in FIG. 7). The sending module and the receiving module are respectively configured to implement a sending function and a receiving function of the communication apparatus 700.

In a possible design solution, the communication apparatus 700 may further include a storage module (not shown in FIG. 7), and the storage module stores a program or instructions. When the processing module 701 executes the program or the instructions, the communication apparatus 700 may be caused to perform a function of the first network element, the first compute node, the first terminal device, or the access network device in the method shown in FIG. 4.

In some embodiments, the processing module 701 in the communication apparatus 700 may be implemented by a processor or a processor-related circuit component, and may be a processor or a processing unit; and the transceiver module 702 may be implemented by a transceiver or a transceiver-related circuit component, and may be a transceiver or a transceiver unit.

For example, FIG. 8 is a diagram of a structure of another communication apparatus according to an embodiment of this application. The communication apparatus may be the first network element, the first compute node, the first terminal device, or the access network device in the foregoing method embodiments, or may be a chip (system) or another part or component that may be disposed in the first network element, the first compute node, the first terminal device, or the access network device. As shown in FIG. 8, the communication apparatus 800 may include a processor 801. In a possible design solution, the communication apparatus 800 may further include a memory 802 and/or a transceiver 803. The processor 801 is coupled to the memory 802 and the transceiver 803, for example, may be connected through a communication bus.

The following describes each component of the communication apparatus 800 in detail with reference to FIG. 8.

The processor 801 is a control center of the communication apparatus 800, and may be one processor or may be a collective term of a plurality of processing elements. For example, the processor 801 includes one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 801 may perform various functions of the communication apparatus 800 by running or executing a software program stored in the memory 802 and invoking data stored in the memory 802.

During specific implementation, in an embodiment, the processor 801 may include one or more CPUs, for example, a CPU 0 and a CPU 1 shown in FIG. 8.

During specific implementation, in an embodiment, the communication apparatus 800 may alternatively include a plurality of processors, for example, the processor 801 and a processor 804 shown in FIG. 8. Each of the processors may be a single-core processor, or may be a multicore processor. The processor herein may be one or more devices, circuits, and/or processing cores configured to process data (for example, computer program instructions).

The memory 802 is configured to store the software program for performing the solutions in this application, and the processor 801 controls the execution. For a specific implementation, refer to the foregoing method embodiments. Details are not described herein again.

In a possible design solution, the memory 802 may be, but is not limited to, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in a form of an instruction or a data structure and accessible by a computer. The memory 802 may be integrated with the processor 801, or may exist independently and is coupled to the processor 801 through an interface circuit (not shown in FIG. 8) of the communication apparatus 800. This is not specifically limited in embodiments of this application.

The transceiver 803 is configured to communicate with another communication apparatus. For example, the communication apparatus 800 is a terminal device, and the transceiver 803 may be configured to communicate with an access network device or communicate with another terminal device. For another example, the communication apparatus 800 is a network device, and the transceiver 803 may be configured to communicate with a terminal device or communicate with another network device.

In a possible design solution, the transceiver 803 may include a receiver and a transmitter (not separately shown in FIG. 8). The receiver is configured to implement a receiving function, and the transmitter is configured to implement a sending function.

In a possible design solution, the transceiver 803 may be integrated with the processor 801, or may exist independently, and is coupled to the processor 801 through an interface circuit (not shown in FIG. 8) of the communication apparatus 800. This is not specifically limited in embodiments of this application.

It should be noted that the structure of the communication apparatus 800 shown in FIG. 8 does not constitute a limitation on the communication apparatus. An actual communication apparatus may include more or fewer components than those shown in the figure, combine some components, or have different component arrangements.

In addition, for technical effects of the communication apparatus 800, refer to the technical effects of the methods in the foregoing method embodiments. Details are not described herein again.

An embodiment of this application further provides a computer-readable storage medium storing a computer program or instructions. When the computer program or instructions are executed by a computer, functions in the foregoing method embodiments are implemented.

An embodiment of this application further provides a computer program product. When the computer program product is executed by a computer, functions in the foregoing method embodiments are implemented.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, technical solutions of this application essentially, or the part contributing to the current technology, or some of the technical solutions may be implemented in a form of a software product. The computer software product is stored in a storage medium, and includes a plurality of instructions for instructing a computer device (which may be a personal computer, a server, or an access network device) to perform all or a part of the steps of the methods described in embodiments of this application. The foregoing storage medium includes any medium that can store program code, such as a USB flash drive, a removable hard disk, a ROM, a random access memory RAM, a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving at least one first request message from a first terminal device, wherein one first request message in the at least one first request message is used to request a first service, the first request message comprises a first identifier and a quality of service QoS requirement of the first service, and the first identifier corresponds to the first request message;
sending a second request message to a first compute node based on the first request message, wherein the second request message is used to request the first compute node to execute a first task related to the first service, the second request message comprises a second identifier, the second identifier corresponds to the first task, and the second identifier is associated with the first identifier;
receiving a second response message from the first compute node, wherein the second response message indicates that the first compute node accepts execution of the first task; and
sending a first response message to the first terminal device based on the second response message, wherein the first response message indicates to provide the first service, and the first response message comprises the first identifier and the second identifier.

2. The method according to claim 1, wherein the method further comprises:
sending a third request message to a user plane network element, wherein the third request message is used to request the user plane network element to establish a tunnel with an access network device for transmitting data of the first task, and the third request message comprises a first QoS configuration used to establish the tunnel; and
sending a fourth request message to the access network device, wherein the fourth request message is used to request the access network device to establish a radio bearer with the first terminal device for transmitting the data of the first task, the fourth request message comprises a second QoS configuration used to establish the radio bearer and the second identifier, and the first QoS configuration and the second QoS configuration are determined based on the QoS requirement of the first service.

3. The method according to claim 2, wherein the third request message further comprises first information, and the first information indicates a filtering and mapping rule for transmitting the data of the first task.

4. The method according to claim 3, wherein the first information comprises at least one of the following: application port information, a first parameter group, or a QoS flow template, wherein the application port information comprises an application port number of the first terminal device and an application port number of the first compute node, the first parameter group comprises an internet protocol IP address of the first terminal device, the application port number of the first terminal device, a data transmission protocol type corresponding to the first service, an IP address of the first compute node, and the application port number of the first compute node, the QoS flow template comprises filtering and mapping rules respectively corresponding to a plurality of different parameter groups, and the plurality of different parameter groups comprise the first parameter group.

5. The method according to any one of claims 1 to 4, wherein the first request message further comprises second information, and the second information comprises at least one of the following: the IP address of the first terminal device, the application port number of the first terminal device, or the data transmission protocol type corresponding to the first service; and the method further comprises:
sending the second information to the first compute node.

6. A communication method, wherein the method comprises:
sending at least one first request message to a first network element, wherein one first request message in the at least one first request message is used to request a first service, the first request message comprises a first identifier and a quality of service QoS requirement of the first service, and the first identifier corresponds to the first request message; and
receiving a first response message from the first network element, wherein the first response message indicates to provide the first service, the first response message comprises the first identifier and a second identifier, the second identifier is associated with the first identifier, and the second identifier corresponds to a first task related to the first service.

7. The method according to claim 6, wherein the method further comprises:
receiving first configuration information from a second device, wherein the first configuration information comprises the second identifier, the first configuration information is used to configure a first terminal device to establish a radio bearer with the second device for transmitting data of the first task, and the second device comprises a second terminal device or an access network device to which the first terminal device belongs;
determining, based on the second identifier, that the first configuration information is configuration information associated with the first identifier; and
transmitting the data of the first task by using the radio bearer configured by the first configuration information.

8. The method according to claim 7, wherein transmitting the data of the first task by using the radio bearer configured by the first configuration information comprises:
mapping an IP data flow of the first task to a first QoS flow based on a first parameter group and/or the QoS flow template, wherein the first parameter group comprises an IP address of the first terminal device, an application port number of the first terminal device, a data transmission protocol type corresponding to the first service, an IP address of a first compute node, and an application port number of the first compute node, and the first compute node is a compute node that executes the first task; and
transmitting the first QoS flow by using the radio bearer configured by the first configuration information.

9. The method according to claim 7, wherein transmitting the data of the first task by using the first configuration information comprises:
mapping an IP data flow of the first task to a first QoS flow based on the second identifier, and transmitting the first QoS flow by using the radio bearer configured by the first configuration information; or
transmitting an IP data flow of the first task by using the radio bearer configured by the first configuration information, wherein
the IP data flow of the first task comprises the second identifier.

10. The method according to any one of claims 6 to 9, wherein the first request message further comprises second information, and the second information comprises at least one of the following: the IP address of the first terminal device, the application port number of the first terminal device, or the data transmission protocol type corresponding to the first service.

11. The method according to any one of claims 1 to 10, wherein the first response message further comprises information about the first compute node and/or the QoS flow template, the information about the first compute node comprises the IP address of the first compute node and/or the application port number of the first compute node, and the information about the first compute node and/or the QoS flow template are/is used to perform filtering and mapping on the data of the first task.

12. A communication method, wherein the method comprises:
receiving a second request message from a first network element, wherein the second request message is used to request a first compute node to execute a first task related to a first service, the second request comprises a second identifier, and the second identifier corresponds to the first task; and
sending a second response message to the first network element based on the second request message, wherein the second response message indicates that the first compute node accepts execution of the first task.

13. The method according to claim 12, wherein the method further comprises:
sending second configuration information to a first terminal device, wherein the second configuration information comprises the second identifier, and the second configuration information is used to configure the first terminal device to establish a radio bearer with the first compute node for transmitting data of the first task; and
sending the data of the first task to the first terminal device by using the radio bearer configured by the second configuration information.

14. The method according to claim 12 or 13, wherein the method further comprises:
sending an IP data flow of the first task or a first QoS flow to a user plane network element, wherein the IP data flow of the first task or the first QoS flow comprises the second identifier, and the first QoS flow is obtained by mapping the IP data flow of the first task based on the second identifier.

15. The method according to any one of claims 1 to 5 or 12 to 14, wherein the second request message further comprises a QoS requirement of the first task, and the QoS requirement of the first task is determined based on the QoS requirement of the first service.

16. The method according to any one of claims 1 to 5 or 12 to 15, wherein the second response message further comprises information about the first compute node, the information about the first compute node comprises the IP address of the first compute node and/or the application port number of the first compute node, and the information about the first compute node is used to perform filtering and mapping on the data of the first task.

17. The method according to claim 16, wherein the second response message further comprises the QoS flow template, and the QoS flow template is used to perform filtering and mapping on the data of the first task.

18. The method according to any one of claim 4, 8, 11, or 17, wherein the QoS flow template is specifically used to filter and map the IP data flow of the first task into the first QoS flow, or the QoS flow template is used to filter the IP data flow of the first task as a service data flow SDF and map the SDF to the first QoS flow.

19. A communication method, wherein the method comprises:
sending second configuration information to a first terminal device, wherein the second configuration information comprises a second identifier, the second configuration information is used to configure the first terminal device to establish a radio bearer with a second device for transmitting data of a first task, and the second identifier corresponds to the first task; and
sending the data of the first task to the first terminal device by using the radio bearer configured by the second configuration information.

20. The method according to claim 19, wherein the second device is an access network device to which the first terminal device belongs; and sending the second configuration information to the first terminal device comprises:
receiving a fourth request message from a first network element, wherein the fourth request message is used to request the access network device to establish a radio bearer with the first terminal device for transmitting the data of the first task, and the fourth request comprises a second QoS configuration used to establish the radio bearer and the second identifier; and
sending the second configuration information to the first terminal device based on the fourth request message.

21. The method according to claim 19 or 20, wherein the method further comprises:
receiving an IP data flow of the first task or a first QoS flow from a user plane network element, wherein the IP data flow of the first task or the first QoS flow comprises the second identifier.

22. The method according to claim 19 or 20, wherein sending the data of the first task to the first terminal device by using the radio bearer configured by the second configuration information comprises:
sending an IP data flow of the first task or a first QoS flow to the first terminal device by using the radio bearer configured by the second configuration information, wherein the IP data flow of the first task or the first QoS flow comprises the second identifier.

23. A communication apparatus, comprising a module configured to perform the method according to any one of claims 1 to 22.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 22 through a logic circuit or by executing code instructions.

25. A communication apparatus, comprising a processor, wherein the processor is configured to run a computer program or instructions, so that the method according to any one of claims 1 to 22 is implemented.

26. A communication chip, wherein the communication chip stores instructions; and when the chip runs on a communication device, the method according to any one of claims 1 to 22 is implemented.

27. A computer-readable storage medium, wherein the computer-readable storage medium stores a computer program or instructions; and when the computer program or the instructions are executed by a communication apparatus, the method according to any one of claims 1 to 22 is implemented.

28. A computer program product, comprising computer program code, wherein when the computer program code is run on a communication apparatus, the communication apparatus implements the method according to any one of claims 1 to 22.
